(19) **Europäisches Patentamt**

**European Patent Office**

**Office européen des brevets**

(11) **EP 1 162 179 B1**

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(51) Int Cl.[7]: **C02F 1/72**, C02F 1/32, B01J 21/06, B01J 35/10, B01J 35/00

(21) Anmeldenummer: **00112446.0**

(22) Anmeldetag: **10.06.2000**

(54) **Photokatalytisches Verfahren**

Photocatalytic process

Procédé photocatalytique

(84) Benannte Vertragsstaaten:
**AT BE CH CY DE DK ES FI FR GB GR IE IT LI LU MC NL PT SE**

(43) Veröffentlichungstag der Anmeldung:
**12.12.2001 Patentblatt 2001/50**

(73) Patentinhaber: **Degussa AG**
**40474 Düsseldorf (DE)**

(72) Erfinder:
• **Meyer, Dr.Jürgen**
**63811 Stockstadt/Main (DE)**
• **Gilges, Dr. Hilmar**
**2018 Antwerpen (BE)**
• **Hemme, Dr. Ina**
**63450 Hanau (DE)**
• **Moiseev, Anna**
**33678 Clausthal-Zellerfeld (DE)**
• **Geissen, Dr. Sven-Uwe**
**38678 Clausthal-Zellerfeld (DE)**

(56) Entgegenhaltungen:
**EP-A- 0 499 362          EP-A- 0 882 674**
**DE-A- 19 843 845        US-A- 4 093 543**
**US-A- 5 849 200**

**Beschreibung**

Die Erfindung betrifft ein Verfahren zur photokatalytischen Entfernung von organischen Substanzen aus Abwässern.

Pyrogenes Titanoxid (kommerziell erhältlich als Degussa $TiO_2$ P 25) zeichnet sich durch seine vielfältigen Anwendungsmöglichkeiten im Bereich der Photokatalyse aus.

(R.W. Matthews, S.R. McEvoy, J. Photochem. Photobiol.A: Chem., 64 (1992) 231-246.;

R.I. Bickley et.al., Journal of Solid State Chemistry, 92 (1991), 178-190.;

R. Franke, C. Franke, Chemosphere, Vol. 39, No. 15 (1999), 2651-2659.

H. Zen, JETI (1998), 46 (10), 66-67.
    Es wird als Vergleichsmaterial mit hoher photokatalytischer Aktivität benutzt.

(V. Loddo et.al., Applied Catalysis B: Environmental 20 (1999), 29 - 45.)

Gegenstand der Erfindung ist ein Verfahren zur photokatalytischen Entfernung von organischen Substanzen aus Abwässern, welches dadurch gekennzeichnet ist, dass man als Photokatalysator Granulate auf Basis von pyrogen hergestelltem Titandioxid mit den folgenden physikalisch-chemischen Kenndaten:

| Mittlerer Korndurchmesser | 10 bis 150 µm |
|---|---|
| BET-Oberfläche | 25 bis 100 m²/g |
| pH-Wert | 3 bis 6 |
| Stampfdichte | 100 bis 1.200 g/l |

verwendet.

Das erfindungsgemäß verwendbare Granulat kann hergestellt werden, indem man pyrogen hergestelltes Titandioxid in Wasser dispergiert, sprühtrocknet und gegebenenfalls die erhaltenen Granulate bei einer Temperatur von 150 bis 1.100 °C während eines Zeitraumes von 1 bis 8 h tempert.

Das pyrogene Titandioxid kann auf bekanntem Wege mittels Hochtemperatur oder Flammenhydrolyse aus $TiCl_4$ hergestellt werden (Ullmanns Enzyklopädie der technischen Chemie, 4. Auflage, Band 21, Seite 464 (1982)).

Die Dispersion in Wasser zur Herstellung der Granulate kann eine Konzentration an Titandioxid von 3 bis 25 Gew.-% aufweiseh.

Zur Dispersion können organische Hilfsmittel zugefügt werden, um die Stabilität der Dispersion zu erhöhen und die Teilchenmorphologie nach der Sprühtrocknung zu verbessern.

Beispielsweise können die folgenden Hilfsstoffe eingesetzt werden:

Polyalkohole, Polyether, Tenside auf Fluorkohlenwasserstoffbasis, Alkohole.

Die Sprühtrocknung kann man bei einer Temperatur von 200 bis 600 °C durchführen. Dabei kann man Scheibenzerstäuber oder Düsenzerstäuber einsetzen.

Die Temperung der Granulate kann man sowohl in ruhender Schüttung, wie zum Beispiel in Kammeröfen, als auch in bewegter Schüttung, wie zum Beispiel Drehrohrtrockner, durchführen.

Durch die Variation der Einsatzstoffe, der Bedingungen bei der Sprühung und der Temperung kann man die physikalisch-chemischen Parameter der Granulate, wie die spezifische Oberfläche, die Korngrößenverteilung, die Stampfdichte, und den pH-Wert innerhalb der angegebenen Grenzen verändern.

Für die Granulation sind keine zusätzlichen Hilfsstoffe erforderlich. Gegenüber dem nichtsprühgetocknetem Titandioxid, das keine definierte Agglomeratgröße aufweist, hat das erfindungsgemäß verwendete Titandioxidgranulat eine definierte Teilchengröße.

Das erfindungsgemäß verwendete Titandioxidgranulat ermöglicht eine staubfreie Handhabung. Auf Grund der hohen Stampfdichte ist ein geringerer Verpackungsaufwand für den Transport erforderlich.

Das erfindungsgemässe Verfahren kann man bei einer Temperatur von 20 bis 40 °C durchführen.

Die Konzentration an organischen Substanzen kann von 10 bis 150 mg/ml betragen.

Die organischen Substanzen, die mit dem erfindungsgemässen Verfahren entfernt werden können, können sein:

4-Chlorphenol, (4-CP)
Dichloressigsäure (DCA)
Trichlorethylen (TCE)
Dichlorethan (DCE)

Das erfindungsgemässe Verfahren weist den Vorteil auf, dass die Schadstoffe schneller abgebaut werden als mit nicht granuliertes Titandioxid P 25 und daß das erfindungsgemäße Titandioxidgranulat besser vom Reaktionsgemisch abgetrennt werden kann als nicht granuliertes Titandioxid P 25 (bessere Sedimentation).

**Beispiele**

Als pyrogen hergestelltes Titandioxid wird ein Titandioxid P 25 mit den folgenden physikalisch-chemischen Kenndaten eingesetzt. Es ist bekannt aus der Schriftenreihe Pigmente Nr. 56 "Hochdisperse Metalloxide nach dem Aerosilverfahren", 4. Auflage, Februar 1989, Degussa AG (Tabelle 1)

Tabelle 1

| | **Titandioxid P 25** |
|---|---|
| CAS-Reg. Nummer | 13463-67-7 |
| Verhalten gegenüber Wasser | hydrophil |
| Aussehen | lockeres weißes Pulver |
| Oberfläche nach BET[1]) $m^2/g$ | $50 \pm 15$ |
| Mittlere Größe der Primärteilchen nm | 21 |
| Stampfdichte[2]) g/l | ca. 100 |
| Spezifisches Gewicht[10]) g/ml | ca. 3,7 |
| Trocknungsverlust[3]) bei Verlassen des Lieferwerkes % (2Stunden bei 105 °C) | < 1,5 |
| Glühverlust[4][7]) (2 Stunden bei 1000°C) | < 2 |
| pH-Wert[5]) (in 4%iger wässriger Dispersion) | 3-4 |
| $SiO_2$[8]) | < 0,2 |
| $Al_2O_3$[8]) | < 0,3 |
| $Fe_2O_3$[8]) | < 0,01 |
| $TiO_2$[8]) | > 99,5 |
| $ZrO2$[8]) | - |
| $HfO2$[8]) | - |
| HCl[8][9]) | < 0,3 |
| Siebrückstand[6]) (nach Mocker, 45 μm) % | < 0,05 |

1) nach DIN 66131

2) nach DIN ISO 787/XI, JIS K 5101/18 (nicht gesiebt)

3) nach DIN ISO 787/II, ASTM D 280, JIS K 5101/21

4) nach DIN 55921, ASTM D 1208, JIS K 5101/23

5) nach DIN ISO 787/IX; ASTM D !"=(; JIS K 5101/24

6) nach DIN ISO 787/XVIII; JIS K 5101/20

7) bezogen auf die 2 Stunden bei 105°C getrocknete Substanz

8) bezogen auf die 2 Stunden bei 1000°C geglühte Substanz

9)HCl-Gehalt ist Bestandteil des Glühverlustes

10) bestimmt mit dem Luftvergleichspyknometer

Zur Herstellung der Titandioxide wird in eine Knallgasflamme aus Wasserstoff und Luft eine flüchtige Titanverbindung eingedüst. In den meisten Fällen verwendet man Titantetrachlorid. Diese Substanz hydrolysiert unter dem Einfluss des bei der Knallgasreaktion entstehenden Wassers zu Titandioxid und Salzsäure. Das Titandioxid tritt nach dem Verlassen der Flamme in eine sogenannte Koagulationszone ein, in der die Titandioxid-Primärteilchen und -Primäraggregate agglomerieren. Das in diesem Stadium als eine Art Aerosol vorliegende Produkt wird in Zyklonen von den gasförmigen Begleitsubstanzen getrennt und anschließend mit feuchter Heißluft nachbehandelt.

Die Teilchengrößen der Titandioxide können mit Hilfe der Reaktionsbedingungen, wie zum Beispiel Flammentemperatur, Wasserstoff- oder Sauerstoffanteil, Titantetrachloridmenge, Verweilzeit in der Flamme oder Länge der Koagulationsstrecke, variiert werden.

Die BET-Oberfläche wird gemäß DIN 66 131 mit Stickstoff bestimmt.

Das Stampfvolumen wird in Anlehnung an ASTM D 4164-88 bestimmt.

Geräte: Stampfvolumeter STA V 2003 der Fa. Engelsmann nach:

DIN 53194, Abs. 5.2. b-f
Messzylinder 250 ml, Teilstriche je 2 ml
Waage mit Fehlergrenze max. ± 0,1 g

Durchführung

Stelle das Zählerwerk des Stampfvolumeters auf 1000 Hübe. Tariere den Messzylinder.
Fülle Granulat in den Messzylinder bis zu 250 ml Marke. Notiere die Einwaage (± 0,1 g).
Spanne den Messzylinder in das Stampfvolumeter und schalte das Gerät ein.
Stampfende → Gerät schaltet nach 1000 Hüben automatisch ab.
Lese das gestampfte Schüttvolumen auf 1 ml genau ab.

Berechnung

E: Granulateinwaage in g
V: Abgelesenes Volumen in ml
W: Wassergehalt in Gew.-% (bestimmt nach Prüfvorschrift P001)

$$\text{Stampfdichte} = \frac{E \times (100 - W)}{V \times 100}$$

Der pH-Wert wird in 4 %iger wässriger Dispersion bestimmt, bei hydrophoben Katalysatorträgern in Wasser: Ethanol 1 : 1.

Herstellung der erfindungsgemäß verwendbaren Granulate

Das pyrogen hergestellte Titandioxid wird in vollentsalztem Wasser dispergiert. Dabei wird ein Dispergieraggregat verwendet, das nach dem Rotor/Stator-Prinzip arbeitet. Die entstehenden Dispersionen werden sprühgetrocknet. Die Abscheidung des Fertigproduktes erfolgt über Filter oder Zyklon.

Die Temperung der Sprühgranulate kann in Muffelöfen erfolgen. Die Daten zur Sprühtrocknung sind in der Tabelle 2 aufgeführt.

**Tabelle 2**

Daten zur Sprühtrocknung von wässrigen $TiO_2P25$-Dispersionen

| Beispiel | Menge $H_2O$ [kg] | Menge $TiO_2P25$ [kg] | Zerstäubung mit | Dehzahl Zerstäuber- scheibe [Upm] | Betriebs- temperatur [°C] | Abluft- temperatur [°C] | Abscheidung |
|----------|------|------|------|------|------|------|------|
| 1 | 10 | 1,5 | Scheibe | 35 000 | 345 | 100 | Zyklon |
| 2 | 10 | 1,5 | Scheibe | 45 000 | 370 | 105 | Zyklon |
| 3 | 10 | 1,5 | Scheibe | 20 000 | 350 | 95 | Zyklon |
| 4 | 10 | 2,5 | Scheibe | 15 000 | 348 | 100 | Zyklon |
| 5 | 100 | 15 | 2-Stoff-Düse | --- | 445 | 130 | Filter |
| 6 | 100 | 15 | Scheibe | 10 000 | 450 | 105 | Filter |
| 7 | 10 | 2,5 | Scheibe | 20 000 | 348 | 105 | Zyklon |
| 8 | 10 | 1,5 | Scheibe | 15 000 | 348 | 105 | Zyklon |
| 9 | 10 | 2,5 | Scheibe | 35 000 | 300 | 105 | Zyklon |

EP 1 162 179 B1

Tabelle 3

Physikalisch-chemische Daten der sprühgetrockneten Produkte

| Beispiel | Oberfläche nach BET [m²/g] | Stampfdichte [g/l] | pH-Wert | $d_{50}$-Wert (Cilas) [µm] | Trocknungs- verlust [%] | Glühverlust [%] |
|---|---|---|---|---|---|---|
| 1 | 51 | 641 | 3,9 | 14,6 | 0,9 | 0,9 |
| 2 | 50 | 612 | 3,7 | 10,6 | 0,8 | 1,0 |
| 3 | 52 | 680 | 3,5 | 25,0 | 0,8 | 1,0 |
| 4 | 51 | 710 | 3,7 | 43,6 | 0,8 | 1,2 |
| 5 | 52 | 660 | 4,0 | 17,1 | 0,9 | 0,9 |
| 6 | 53 | 702 | 3,9 | 27,5 | 0,9 | 0,9 |
| 7 | 50 | 708 | 3,5 | 26,7 | 1,1 | 0,6 |
| 8 | 53 | 696 | 3,9 | 30,1 | 1,0 | 0,9 |
| 9 | 49 | 640 | 3,7 | 16,0 | 0,7 | 0,8 |

Das erfindungsgemäße Verfahren wird bei dem photokatalytischen Abbau von chlorierten Kohlenwasserstoffen unter UV-Bestrahlung in gegebenenfalls angesäuerter, wässriger Suspension auf seine photokatalytische Aktivität getestet.

Als Vergleichswert (Nullwert) wird die photokatalytische Abbaugeschwindigkeit von chlorierten Kohlenwasserstoffen unter UV-Bestrahlung in gegebenenfalls angesäuerter wässriger Suspension beim Einsatz von reinem Titandioxid Degussa P 25 als Photokatalysator benutzt. Die Dauer der Versuche mit Degussa P 25 beträgt maximal 360 Minuten.

**1. Versuchsdurchführung zur Bestimmung der Geschwindigkeit des photokatalytischen Abbaus von chlorierten Kohlenwasserstoffen in Suspension**

Die Gesamtlaufzeit der Versuche zur Überprüfung der Geschwindigkeit des photokatalytischen Abbaus von chlorierten Kohlenwasserstoffen, wie 4-CP (4-Chlorphenol)unter UV-Bestrahlung in rein wässriger oder angesäuerter wässriger Suspension liegt bei max. 360 Minuten (min).

Die Abbaureaktion wird in einem Rührreaktor durchgeführt. Zusätzlich wird die zu untersuchende Suspension vom Vorratsbehälter zum Rührreaktor und zurückgepumpt, so dass eine gleichmäßige UV-Bestrahlung gewährleistet ist. Der Anfangs-pH-Wert der Suspension liegt im Bereich 2-6, bevorzugt pH=2-3. Die Temperatur im Rührreaktor liegt im Bereich von 25-40 °C, bevorzugt zwischen 30 und 35 °C. Die Konzentration des jeweils eingesetzten photokatalytisch aktiven Titandioxids ($TiO_2$ P 25 oder granuliertes $TiO_2$) beträgt 1 g/l. Die Konzentration des Kohlewasserstoffs liegt zwischen 10 und 150 mg/l, bevorzugt bei 120 mg/l.

Die Temperatur wird mittels kontinuierlichem Pumpen vom Vorratsgefäß zur UV-Bestrahlungseinheit und zurück, und außerdem durch Kühlung des UV-Lampensystems mittels Kühlwasser in dem oben genanntem konstanten Bereich gehalten. Für die gesamte Dauer der Abbaureaktion findet eine kontinuierliche Kontrolle des Abbaufortschrittes der chlorierten Kohlenwasserstoffe unter UV-Bestrahlung statt. Aus dieser in regelmäßigen Abständen stattfindenden Bestimmung des TOC-Wertes (TOC = Total Organic Carbon = organisch gebundener Kohlenstoff) lässt sich der Faktor $TOC/TOC_0$ bestimmen ($TOC_0$ = Anfangskonzentration des organisch gebundenen Kohlenstoffs in Suspension). $TOC/TOC_0$ gibt den prozentualen TOC-Gehalt zu einem bestimmten Entnahmezeitpunkt an.

In einer $TOC/TOC_0$-Zeit-Kurve wird der Verlauf des Abbaus von chlorierten Kohlenwasserstoffen, wie 4-CP (4-Chorphenol) aufgetragen. Die Abbaugeschwindigkeit von $TiO_2$ P 25 wird als Standard ebenfalls unter den gleichen Bedingungen getestet.

Der Gesamtkurvenverlauf wird aufgenommen.

$TiO_2$ P 25:

In das Vorratsgefäß und den Rührreaktor werden 120 mg/l 4-CP (4-Chlorphenol) und 1 g/l $TiO_2$ P 25 in angesäuerter wässriger Suspension gegeben und nach der oben beschriebenen Vorgehensweise behandelt. Eine $TOC/TOC_0$-Zeit-Kurve wird aufgenommen. Nach 360 min. sind 40,5 % des Anfangs-TOC-Gehaltes vorhanden.

Granuliertes $TiO_2$ (gemäß Erfindung):

In das Vorratsgefäß und den Rührreaktor werden 120 mg/l 4-CP (4-Chlorphenol) und 1 g/l granuliertes $TiO_2$, gemäß Beispiel 1, in angesäuerter wässriger Suspension gegeben und nach der oben beschriebenen Vorgehensweise behandelt. Eine $TOC/TOC_0$-Zeit-Kurve wird aufgenommen. Nach 360 min. sind 35,0 % des Anfangs-TOC-Gehaltes vom 4-CP (4-Chlorphenol) vorhanden.

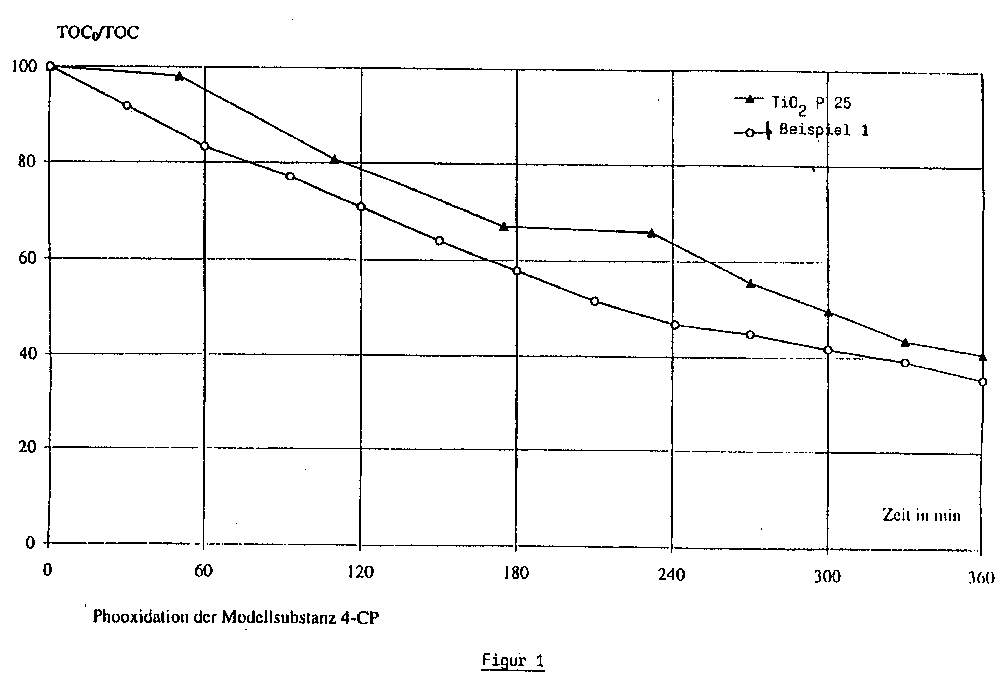

Die ermittelten Werte sind in der Figur 1 graphisch dargestellt.

**2. Versuchsergebnisse des photokatalytischen Abbaus von 4-CP (4-Chorphenol) mittels Titandioxid P 25 und granuliertem Titandioxid nach 360 Minuten (min).**

| Katalysator | Rest-$TOC/TOC_0$ bei t = 360 min. [%] | Verbesserung [%] |
|---|---|---|
| $TiO_2$ P 25 | 40,5 | / |
| Granuliertes $TiO_2$ | 35,0 | 13,6 % |

Reaktorvolumen: $V_{Reaktor}$ = 1,7 l
Gesamtvolumen: $V_{Reaktor}$ = 3,0 l
Mit $O_2$ ständig begast
Strahler: UVH1022 Z4 Eisendotierte
Quecksilberhochdrucklampe
Ausschlussleistung 500 W (Heraeus)
Katalysatorkonzentration: 1 g/l
Anfangskonzentration der chlorierten Kohlenwasserstoffe: $c_0$ = 120 mg/l
Anfangs pH-Wert: $pH_0$ = 2,4

Versuche zur Bestimmung der photokatalytischen Oxidation von chlorierten Kohlenwasserstoffen (zum Beispiel 4-CP) unter UV-Bestrahlung und unter Nutzung von granuliertem Titandioxid als Photokatalysator finden in rein wässriger oder angesäuerter wässriger Suspension statt. Die Suspension wird ständig gerührt und kontinuierlich mit der eisendotierten Quecksilberhochdrucklampe UVH1022 Z4 bestrahlt. Eine Kühlung für die Lampe ist vorhanden, um konstante Bedingungen zu gewährleisten. Ebenso wird die Suspension durch kontinuierliches Pumpen vom Vorratsbehälter zum Reaktor und zurück und durch zusätzliche Kühlung auf konstanter Temperatur gehalten.

**Patentansprüche**

1. Verfahren zur photokatalytischen Entfernung von organischen Substanzen aus Abwässern, **dadurch gekennzeichnet, dass** man als Photokatalysator Granulate auf Basis von pyrogen hergestelltem Titandioxid mit den folgenden physikalisch-chemischen Kenndaten:

| | |
|---|---|
| Mittlerer Korndurchmesser | 10 bis 150 μm |
| BET-Oberfläche | 25 bis 100 m²/g |
| pH-Wert | 3 bis 6 |
| Stampfdichte | 100 bis 1.200 g/l |

verwendet.

**Claims**

1. A process for photocatalytic removal of organic substances from waste waters, **characterised in that** by way of photocatalyst use is made of granulates based on pyrogenically prepared titanium dioxide having the following physicochemical characteristic data:

| | |
|---|---|
| Mean grain diameter | 10 to 150 μm |
| BET surface | 25 to 100 m²/g |
| pH value | 3 to 6 |
| Compacted bulk density | 100 to 1,200 g/l. |

**Revendications**

1. Procédé pour l'élimination photocatalytique de substances organiques présentes dans les eaux résiduaires, **caractérisé en ce qu'**
on utilise comme photo-catalyseur des granulats à base de dioxyde de titane fabriqué par voie pyrogénique, présentant les caractéristiques physico-chimiques suivantes :

| | |
|---|---|
| Diamètre de grain moyen | 10 à 150 μm |
| Surface BET | 25 à 100 m²/g |
| pH | 3 à 6 |
| Densité après damage | 100 à 1.200 g/l. |

Figur 1